# EUROPEAN PATENT APPLICATION

(11) **EP 4 603 698 A1**
(43) Date of publication of application: **20.08.2025**
(21) Application number: 25157437.2
(22) Date of filing: 12.02.2025
(51) Int. Cl.: F03D 7/02

(54) **SYSTEM AND METHOD FOR PREDICTING OPTIMAL STARTING OF A YAW DRIVE SYSTEM OF A WIND TURBINE**

(30) Priority: 13.02.2024 US 202418439996
(71) Applicant: GE Infrastructure Technology LLC, Greenville, SC 29615 (US)
(72) Inventor: Dharmadhikari, Parag Rameshchandra, 85748 Garching (DE); Honhoff, Saskia Gerarda, 85748 Garching (DE)
(74) Representative: Zimmermann & Partner Patentanwälte mbB

(57) **Abstract**

A method for protecting one or more components of a yaw system of a wind turbine includes monitoring one or more loading signals indicative of a yawing moment of a rotor of the wind turbine. The method also includes evaluating the one or more loading signals indicative of the yawing moment of the rotor. Further, the method includes predicting an optimal start time for the yaw system based on the evaluated one or more loading signals. Moreover, the method includes starting the yaw system at the optimal start time to minimize loading of the yaw system of the wind turbine.

## Description

### FIELD

The present disclosure relates generally to wind turbines, and more particularly to systems and methods for predicting an optimal starting point of a yaw system of a wind turbine to minimize loading on the yaw system.

### BACKGROUND

Modern wind turbines are commonly used to supply electricity into the electrical grid. Wind turbines of this kind generally include a tower and a rotor arranged on the tower. The rotor, which typically comprises a hub and a plurality of rotor blades, is set into rotation under the influence of the wind on the rotor blades. Such rotation generates a torque that is normally transmitted through a rotor shaft to a generator, either directly ("directly driven" or "gearless") or through the use of a gearbox. This way, the generator produces electricity which can be supplied to the electrical grid.

The hub may be rotatably coupled to a front of the nacelle. Further, the hub may be connected to a rotor shaft, and the rotor shaft may then be rotatably mounted in the nacelle using one or more bearings arranged in a frame inside the nacelle. The nacelle is a housing arranged on top of the tower that may contain and protect the gearbox (if present) and the generator (if not placed outside the nacelle) and, depending on the wind turbine, further components such as a power converter, auxiliary systems, etc.

Wind turbines also usually include a yaw system for orienting the rotor of the wind turbine in the prevailing wind direction during operation. When operation is to be interrupted, the rotor may be rotated away from the prevailing wind direction. Normally, when the rotor is aligned with the wind direction, the yaw system maintains the position by means of brakes, e.g. hydraulic brake calipers and/or electro-brakes of the yaw motors. These brakes can be activated and deactivated by a control system of the wind turbine.

During operation, the direction of the wind may change. When the rotor is misaligned with respect to the wind direction, the yaw system rotates the nacelle about a longitudinal axis of the tower to reach an alignment with the wind. The determination that the nacelle and rotor are no longer aligned with the prevailing wind direction may be made based, e.g. on a weather vane mounted on the nacelle. However, other methods based on measuring loads and/or oscillations are also known.

Generally, the yaw system may be activated if the prevailing wind direction deviates from the rotor and nacelle orientation by more than a predefined threshold (e.g. 5°, 7°, or 10° or more) for at least a predetermined period of time. A predetermined period of time may be 1 minute, 5 minutes, 10 minutes or more. Seconds to minute averages, e.g. 3 second, 10 second, 1 minute, or 5 minute averages, may for example be determined to calculate the direction of the prevailing wind speed.

The yaw system normally performs this rotation of the nacelle by means of a yaw drive that includes a plurality of motors, e.g. electric or hydraulic motors, with suitable gearboxes for driving yaw gears (pinions) that mesh with an annular gear or gear ring attached to the nacelle or to the tower. The nacelle can thus be rotated around a longitudinal axis of the tower in or out of the wind direction. The rotatable connection between the tower and the nacelle is called a yaw bearing. The yaw bearing can be of the roller or gliding type.

With recent developments in providing larger wind turbines, new challenges arise in which some components of the yaw system may be adversely affected. For example, the yaw gears/pinions, yaw gearbox, yaw bearing, motor shaft, etc. may be more susceptible to damage due to increased loading associated with larger rotor blades, a larger hub, a larger nacelle, etc. Such damage can cause premature repairs and/or replacement of such components.

### BRIEF DESCRIPTION

Aspects and advantages of the invention will be set forth in part in the following description, or may be obvious from the description, or may be learned through practice of the invention.

In an aspect, the present disclosure is directed to a method for protecting one or more components of a yaw system of a wind turbine. The method includes monitoring one or more loading signals indicative of a yawing moment of a rotor of the wind turbine. Further, the method includes evaluating the one or more loading signals indicative of the yawing moment of the rotor. The method also includes predicting an optimal start time for the yaw system based on the evaluated one or more loading signals. Moreover, the method includes starting the yaw system at the optimal start time to minimize loading of the yaw system of the wind turbine.

In another aspect, the present disclosure is directed to a wind turbine having a tower, a nacelle rotatably mounted on top of the tower, a rotor with a plurality of rotor blades, a yaw system, and a controller having a processor configured to perform a plurality of operations. The plurality of operations include but are not limited to monitoring one or more loading signals indicative of a yawing moment of the rotor, evaluating the one or more loading signals indicative of the yawing moment, predicting an optimal start time for the yaw system based on the evaluated one or more loading signals, and starting the yaw system at the optimal start time to minimize loading of the yaw system of the wind turbine.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of an embodiment of a nacelle of the wind turbine of FIG. 1;
FIG. 3 illustrates a block diagram of an embodiment of a controller for a wind turbine according to the present disclosure; and
FIG. 4 illustrates a flow diagram of an embodiment of a method for protecting one or more components of a yaw system of a wind turbine according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

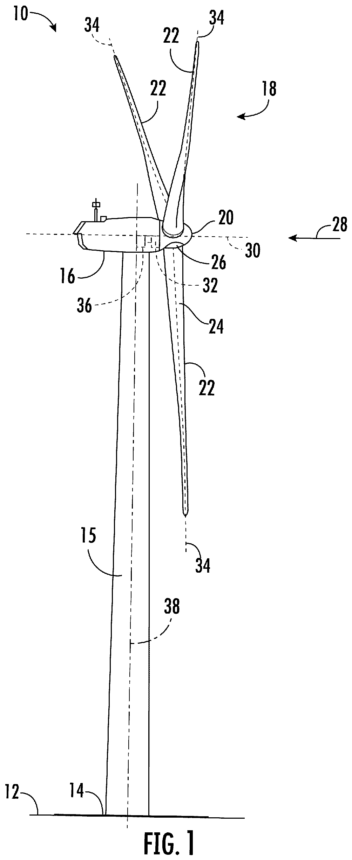

Referring now to the drawings, FIG. 1 illustrates a perspective view of an embodiment of a wind turbine 10 according to the present disclosure. In an embodiment, as shown, the wind turbine 10 is a horizontal-axis wind turbine. Further, as shown, the wind turbine 10 includes a tower 15 that extends from a support system 14 on a ground 12, a nacelle 16 mounted on the tower 15, and a rotor 18 that is coupled to nacelle 16. The rotor 18 includes a rotatable hub 20 and at least one rotor blade 22 coupled to and extending outward from the hub 20. In the illustrated embodiment, the rotor 18 has three rotor blades 22. In an alternative embodiment, the rotor 18 includes more or less than three rotor blades 22. The tower 15 may be fabricated from tubular steel to define a cavity (not shown in FIG. 1) between the support system 14 and the nacelle 16. In an alternative embodiment, the tower 15 is any suitable type of a tower having any suitable height. According to an alternative, the tower 15 can be a hybrid tower comprising a portion made of concrete and a tubular steel portion. Also, the tower 15 can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mounted to the hub 20 by coupling a blade root region 24 to the hub 20 at a plurality of load transfer regions 26. The load transfer regions 26 may have a hub load transfer region and a blade load transfer region (both not shown in FIG. 1). Loads induced to the rotor blades 22 are transferred to the hub 20 via the load transfer regions 26.

In an embodiment, the rotor blades 22 may have a length ranging from about 15 meters (m) to about 90 m or more. The rotor blades 22 may have any suitable length that enables the wind turbine 10 to function as described herein. For example, non-limiting examples of blade lengths include 20 m or less, 37 m, 48 m, 50 m, 52 m or a length that is greater than 91m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction 28, may be changed by a pitch system 32 to control the load and power output by the wind turbine 10 by adjusting an angular position of at least one rotor blade 22 relative to wind vectors. The pitch axes 34 of each of the rotor blades 22 are shown. During operation of the wind turbine 10, the pitch system 32 may particularly change a pitch angle of the rotor blades 22 such that the angle of attack of (portions of) the rotor blades 22 are reduced, which facilitates reducing a rotational speed and/or facilitates a stall of the rotor 18.

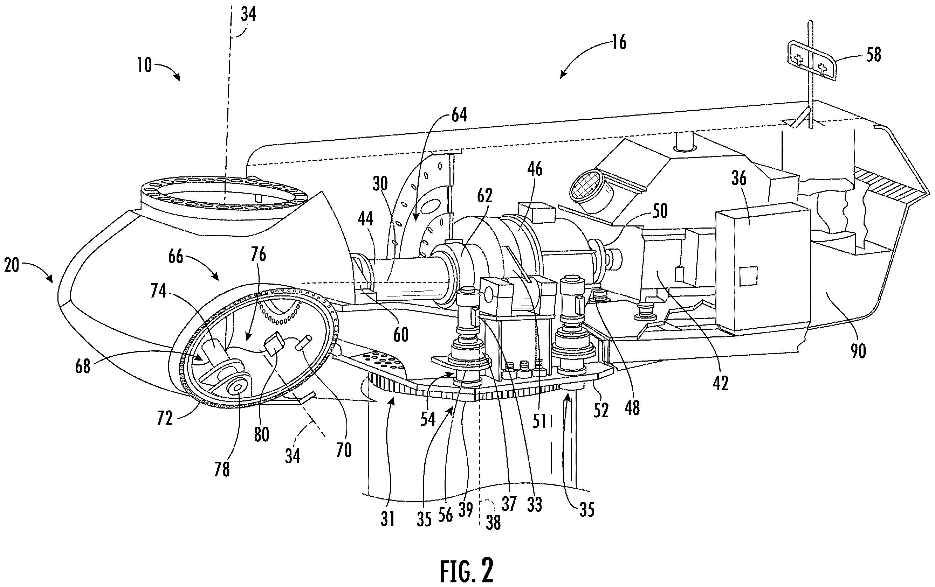

In an embodiment, a blade pitch of each rotor blade 22 is controlled individually by a turbine controller 36 or by a pitch control system 80 (FIG. 2). Alternatively, the blade pitch for all rotor blades 22 may be controlled simultaneously by said control systems. Further, in the example, as the wind direction 28 changes, the nacelle 16 may be rotated about a yaw axis 38 to position the rotor blades 22 with respect to wind direction 28.

In an embodiment, the turbine controller 36 is shown as being centralized within the nacelle 16, however, the turbine controller 36 may be a distributed system throughout the wind turbine 10, on the support system 14, within a wind farm, and/or at a remote-control center.

Referring now to FIG. 2, an enlarged sectional view of a portion of the nacelle 16 of the wind turbine 10 is illustrated. More specifically, as shown, the hub 20 of the rotor 18 is rotatably coupled to an electric generator 42 positioned within the nacelle 16 by a main shaft 44, a gearbox 46, a high-speed shaft 48, and a coupling 50. In an embodiment, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of the coupling 50.

Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (e.g. 10 - 35 KV). Said electrical energy is conducted via power cables from the nacelle 16 into the tower 15.

The gearbox 46, the generator 42, and the transformer 90 may be supported by a main support structure frame of the nacelle 16, optionally embodied as a main frame 52. The gearbox 46 may include a gearbox housing that is connected to the main frame 52 by one or more torque arms 51. Further, as shown, the nacelle 16 also includes a main forward support bearing 60 and a main aft support bearing 62.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, the generator 42, the gearbox 46, the high speed shaft 48, the coupling 50, and any associated fastening, support, and/or securing device including, but not limited to, the main frame 52, and the forward support bearing 60 and the aft support bearing 62, are sometimes referred to as a drive train 64.

In some examples, the wind turbine 10 may be a direct drive wind turbine without the gearbox 46. In such embodiments, the generator 42 operates at the same rotational speed as the rotor 18. Such wind turbines also generally have a much larger diameter than generators used in wind turbines having a gearbox 46 for providing a similar amount of power than a wind turbine with a gearbox.

The nacelle 16 also may include a yaw system 54 which includes a yaw bearing 31 having two bearing components configured to rotate with respect to the other. The tower 15 is coupled to one of the bearing components and the bedplate or main frame 52 of the nacelle 16 is coupled to the other bearing component. The yaw system 54 may further include a yaw drive mechanism 56 that may be used to rotate the nacelle 16 and thereby also the rotor 18 about the yaw axis 38 to control the perspective of the rotor blades 22 with respect to the wind direction 28.

The yaw drive mechanism 56 may include a plurality of yaw drives 35 with a motor 33, a gearbox 37, and a pinion 39 for meshing with the yaw bearing 31 for rotating one of the bearing components with respect to the other. The yaw bearing 31 may include a plurality of teeth which engage with the teeth of the pinion 39. In the example of FIG. 2, the yaw drives 35 and the yaw bearing 31 are placed outside the external diameter of the tower 15. The teeth of the yaw bearing 31 are outwardly orientated, but in other examples, the yaw bearing 31 and yaw drives 35 may be arranged at the inside of the tower 15.

In some examples, one of the yaw drives 35 may be a "primary" drive, and the other drives may be "secondary" drives following the instructions of the primary drive or adapting their operation to adapt to the primary drive.

The turbine controller 36 may be communicatively coupled to the yaw drive mechanism 56 of the wind turbine 10 for controlling and/or altering the yaw direction of the nacelle 16 relative to the wind direction 28. As the direction of the wind 28 changes, the turbine controller 36 may be configured to control a yaw angle of the nacelle 16 about the yaw axis 38 to position the rotor blades 22, and therefore the rotor 18, with respect to the wind direction 28, thereby controlling the loads acting on the wind turbine 10. For example, the turbine controller 36 may be configured to transmit control signals or commands to the yaw drive mechanism 56 of the wind turbine 10, via a yaw controller or direct transmission, such that the nacelle 16 may be rotated about the yaw axis 38 via the yaw bearing 31.

Still referring to FIG. 2, for positioning the nacelle 16 appropriately with respect to the wind direction 28, the nacelle 16 may also include at least one meteorological measurement system 58 which may include a wind vane and anemometer. The meteorological measurement system 58 can provide information to the turbine controller 36 that may include wind direction 28 and/or wind speed.

Furthermore, in an embodiment, the pitch system 32 may be at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in FIG. 1) for modulating the pitch angel of the rotor blade 22 along the pitch axis 34. Only one of three pitch drive systems 68 is shown in FIG. 2.

In an embodiment, the pitch assembly 66 includes at least one pitch bearing 72 coupled to hub 20 and to a respective rotor blade 22 (shown in FIG. 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

The pitch drive system 68 is coupled to the turbine controller 36 for adjusting the pitch angle of the rotor blade 22 upon receipt of one or more signals from the turbine controller 36. In an embodiment, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the turbine controller 36, in case of specific prioritized situations and/or during rotor overspeed. In an embodiment, the pitch control system 80 is communicatively coupled to the pitch drive system 68 for controlling the pitch drive system 68 independently from the turbine controller 36. In an embodiment, the pitch control system 80 is coupled to the pitch drive system 68 and to the sensor 70. During normal operation of the wind turbine 10, the turbine controller 36 may control the pitch drive system 68 to adjust a pitch angle of rotor blades 22.

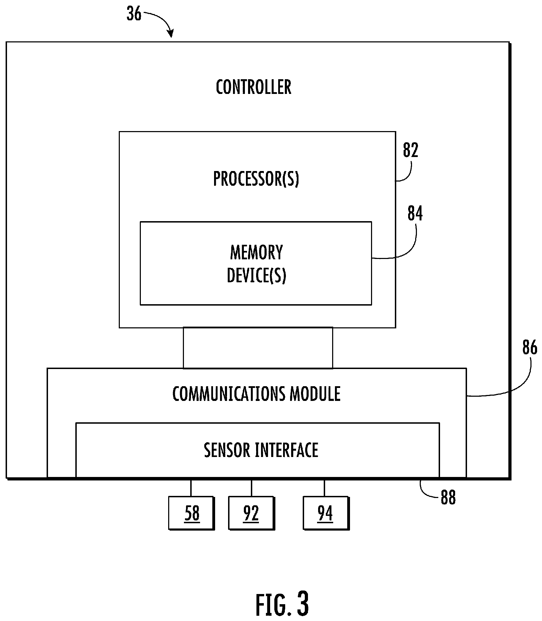

Referring now to FIG. 3, a block diagram of an embodiment of the turbine controller 36 is illustrated according to the present disclosure. As shown, the turbine controller 36 may include one or more processor(s) 82 and associated memory device(s) 84 configured to perform a variety of computer-implemented functions (e.g., performing the methods, steps, calculations and the like and storing relevant data as disclosed herein). Additionally, the turbine controller 36 may also include a communications module 86 to facilitate communications between the turbine controller 36 and the various components of the wind turbine 10, e.g. any of the components of FIG. 2. The communications module 86 may include a sensor interface 88 (e.g., one or more analog-to-digital converters) to permit signals transmitted from one or more sensors 92, 94 to be converted into signals that can be understood and processed by the processors 82. It should be appreciated that various sensors (e.g. sensors 92, 94) may be communicatively coupled to the communications module 86 using any suitable means. For example, as shown in FIG. 3, the sensors 92, 94 may be coupled to the sensor interface 88 via a wired connection. However, in other embodiments, the sensors 92, 94 may be coupled to the sensor interface 88 via a wireless connection, such as by using any suitable wireless communications protocol known in the art. As such, the processor 82 may be configured to receive one or more signals from the sensors 92, 94.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 82 is also configured to compute advanced control algorithms and communicate to a variety of Ethernet or serial-based protocols (Modbus, OPC, CAN, etc.). Additionally, the memory device(s) 84 may generally include memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 84 may generally be configured to store suitable computer-readable instructions that, when implemented by the processor(s) 82, configure the turbine controller 36 to perform the various functions as described herein.

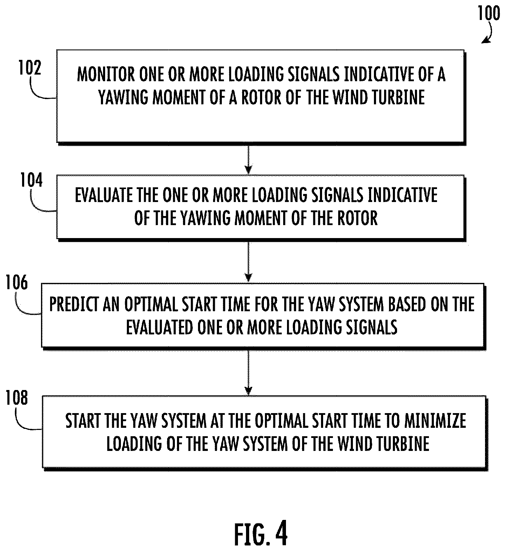

Referring now to FIG. 4, a flow diagram of an embodiment of a method 100 for protecting one or more components of a yaw system of a wind turbine, such as the yaw system 54 of the wind turbine 10, by reducing peak power required to yaw is illustrated according to the present disclosure. In general, the method 100 will be described herein with reference to the wind turbine 10 and the turbine controller 36 described above with reference to FIGS. 1-3. However, it should be appreciated by those of ordinary skill in the art that the disclosed method 100 may generally be utilized to operate any other wind turbine having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (102), the method 100 includes monitoring one or more loading signals indicative of a yawing moment (e.g., a Q moment) of the rotor 18 of the wind turbine 10. For example, in an embodiment, the yawing moment may be monitored via one or more sensors, such as sensors 92, 94. In particular embodiments, the sensors 92, 94 may be part of an asymmetrical load control (ALC) sensor system of the wind turbine 10. Moreover, in an embodiment, the loading signal(s) indicative of the yawing moment may include one or more historical loading signals and/or one or more instantaneous loading signals (e.g., the D moment and/or the Q moment). For example, in an embodiment, the historical loading signals may include the yawing moment from the three most recent rotations of the yaw system 54. In another embodiment, the historical loading signals may include the yawing moment from less than three or more than three of the most recent rotations of the yaw system 54.

Referring still to FIG. 4, as shown at (104), the method 100 includes evaluating the loading signal(s) indicative of the yawing moment of the rotor 18. For example, in an embodiment, evaluating the loading signal(s) indicative of the yawing moment may include fitting a sinusoidal waveform to the loading signal(s). In such embodiments, fitting the sinusoidal waveform to the loading signal(s) signals includes fitting phase and frequency of the sinusoidal waveform to the loading signal(s). In another embodiment, evaluating the loading signal(s) indicative of the yawing moment include applying a fast Fourier transform (FFT) to the loading signal(s). In such embodiments, applying the FFT to the loading signal(s) includes converting the loading signal(s) to a signal representation in a frequency domain having both phase and frequency.

As shown at (106), the method 100 includes predicting an optimal start time for the yaw system 54 based on the evaluated loading signal(s). As used herein, the optimal start time generally refers to the start time having the lowest loading resistance. Thus, in an embodiment, starting the yaw system 54 at the optimal start time to minimize loading of the yaw system 54 may include implementing a time delay until the loading signal(s) are below a predetermined threshold. As shown at (108), the method 100 includes starting the yaw system 54 at the optimal start time to minimize loading of the yaw system 54 of the wind turbine 10.

In another embodiment, the method 100 may further include monitoring the wind direction 28 at the wind turbine 10, e.g., using and starting the meteorological measurement system 58 and starting the yaw system 54 at the optimal start time and into the wind direction 28.

Accordingly, the present disclosure is directed to an algorithm that combines the yawing request with proactive instantaneous load reduction and observes the prior wind speed/loading performance to arrive at the optimal start time for the yaw system 54.

Further aspects of the invention are provided by the subject matter of the following clauses:

A method for protecting one or more components of a yaw system of a wind turbine, the method comprising: monitoring one or more loading signals indicative of a yawing moment of a rotor of the wind turbine; evaluating the one or more loading signals indicative of the yawing moment of the rotor; predicting an optimal start time for the yaw system based on the evaluated one or more loading signals; and starting the yaw system at the optimal start time to minimize loading of the yaw system of the wind turbine.

The method of any preceding clause, further comprising monitoring wind direction at the wind turbine and starting the yaw system at the optimal start time and into the wind direction.

The method of any preceding clause, further comprising monitoring the one or more loading signals indicative of the yawing moment of the rotor of the wind turbine via one or more sensors.

The method of any preceding clause, wherein the one or more loading signals indicative of the yawing moment of the rotor of the wind turbine comprise at least one of one or more historical loading signals or one or more instantaneous loading signals.

The method of any preceding clause, wherein the historical loading signals comprises the yawing moment from at least three most recent rotations of the yaw system.

The method of any preceding clause, wherein evaluating the one or more loading signals indicative of the yawing moment of the rotor further comprises: fitting a sinusoidal waveform to the one or more loading signals.

The method of any preceding clause, wherein fitting the sinusoidal waveform to the one or more loading signals further comprises fitting phase and frequency of the sinusoidal waveform to the one or more loading signals.

The method of any preceding clause, wherein evaluating the one or more loading signals indicative of the yawing moment of the rotor further comprises:
applying a fast Fourier transform (FFT) to the one or more loading signals.

The method of any preceding clause, wherein applying the FFT to the one or more loading signals further comprises converting the one or more loading signals to a signal representation in a frequency domain having both phase and frequency.

The method of any preceding clause, wherein starting the yaw system at the optimal start time to minimize loading of the yaw system of the wind turbine further comprises implementing a time delay until the one or more loading signals are below a predetermined threshold.

A wind turbine, comprising: a tower; a nacelle rotatably mounted on top of the tower; a rotor comprising a plurality of rotor blades; a yaw system; and a controller comprising a processor configured to perform a plurality of operations, the plurality of operations comprising: monitoring one or more loading signals indicative of a yawing moment of the rotor; evaluating the one or more loading signals indicative of the yawing moment; predicting an optimal start time for the yaw system based on the evaluated one or more loading signals; and starting the yaw system at the optimal start time to minimize loading of the yaw system of the wind turbine.

The wind turbine of any preceding clause, wherein the plurality of operations further comprise monitoring wind direction at the wind turbine and starting the yaw system at the optimal start time and into the wind direction.

The wind turbine of any preceding clause, wherein the plurality of operations further comprise monitoring the one or more loading signals indicative of the yawing moment of the rotor via one or more sensors.

The wind turbine of any preceding clause, wherein the one or more loading signals indicative of the yawing moment of the rotor comprise at least one of one or more historical loading signals or one or more instantaneous loading signals.

The wind turbine of any preceding clause, wherein the historical loading signals comprises the yawing moment from at least three most recent rotations of the yaw system.

The wind turbine of any preceding clause, wherein evaluating the one or more loading signals indicative of the yawing moment of the rotor further comprises:
fitting a sinusoidal waveform to the one or more loading signals.

The wind turbine of any preceding clause, wherein fitting the sinusoidal waveform to the one or more loading signals further comprises fitting phase and frequency of the sinusoidal waveform to the one or more loading signals.

The wind turbine of any preceding clause, wherein evaluating the one or more loading signals indicative of the yawing moment of the rotor further comprises: applying a fast Fourier transform (FFT) to the one or more loading signals.

The wind turbine of any preceding clause, wherein applying the FFT to the one or more loading signals further comprises converting the one or more loading signals to a signal representation in a frequency domain having both phase and frequency.

The wind turbine of any preceding clause, wherein starting the yaw system at the optimal start time to minimize loading of the yaw system of the wind turbine further comprises implementing a time delay until the one or more loading signals are below a predetermined threshold.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for protecting one or more components of a yaw system of a wind turbine, the method comprising:
monitoring one or more loading signals indicative of a yawing moment of a rotor of the wind turbine;
evaluating the one or more loading signals indicative of the yawing moment of the rotor;
predicting an optimal start time for the yaw system based on the evaluated one or more loading signals; and
starting the yaw system at the optimal start time to minimize loading of the yaw system of the wind turbine.

2. The method of claim 1, further comprising monitoring wind direction at the wind turbine and starting the yaw system at the optimal start time and into the wind direction.

3. The method of any preceding claim, further comprising monitoring the one or more loading signals indicative of the yawing moment of the rotor of the wind turbine via one or more sensors.

4. The method of any preceding claim, wherein the one or more loading signals indicative of the yawing moment of the rotor of the wind turbine comprise at least one of one or more historical loading signals or one or more instantaneous loading signals.

5. The method of claim 4, wherein the historical loading signals comprises the yawing moment from at least three most recent rotations of the yaw system.

6. The method of any preceding claim, wherein evaluating the one or more loading signals indicative of the yawing moment of the rotor further comprises:
fitting a sinusoidal waveform to the one or more loading signals.

7. The method of claim 6, wherein fitting the sinusoidal waveform to the one or more loading signals further comprises fitting phase and frequency of the sinusoidal waveform to the one or more loading signals.

8. The method of any preceding claim, wherein evaluating the one or more loading signals indicative of the yawing moment of the rotor further comprises:
applying a fast Fourier transform (FFT) to the one or more loading signals.

9. The method of claim 8, wherein applying the FFT to the one or more loading signals further comprises converting the one or more loading signals to a signal representation in a frequency domain having both phase and frequency.

10. The method of any preceding claim, wherein starting the yaw system at the optimal start time to minimize loading of the yaw system of the wind turbine further comprises implementing a time delay until the one or more loading signals are below a predetermined threshold.

11. A wind turbine, comprising:
a tower;
a nacelle rotatably mounted on top of the tower;
a rotor comprising a plurality of rotor blades;
a yaw system; and
a controller comprising a processor configured to perform a plurality of operations, the plurality of operations comprising:
monitoring one or more loading signals indicative of a yawing moment of the rotor;
evaluating the one or more loading signals indicative of the yawing moment;
predicting an optimal start time for the yaw system based on the evaluated one or more loading signals; and
starting the yaw system at the optimal start time to minimize loading of the yaw system of the wind turbine.

12. The wind turbine of claim 11, wherein the plurality of operations further comprise monitoring wind direction at the wind turbine and starting the yaw system at the optimal start time and into the wind direction.

13. The wind turbine of claims 11-12, wherein the plurality of operations further comprise monitoring the one or more loading signals indicative of the yawing moment of the rotor via one or more sensors.

14. The wind turbine of claims 11-13, wherein the one or more loading signals indicative of the yawing moment of the rotor comprise at least one of one or more historical loading signals or one or more instantaneous loading signals.

15. The wind turbine of claim 14, wherein the historical loading signals comprises the yawing moment from at least three most recent rotations of the yaw system.
